# EUROPÄISCHE PATENTSCHRIFT

(11) **EP 1 244 116 B1**
(45) Veröffentlichungstag und Bekanntmachung des Hinweises auf die Patenterteilung: **23.06.2010**
(21) Anmeldenummer: 02001310.8
(22) Anmeldetag: 18.01.2002
(51) Int. Cl.: H01F 7/08

(54) **Herstellverfahren für Magnetanker**
Method of manufacturing an armature
Procédé de fabrication d'une armature

(30) Priorität: 20.03.2001 DE 10113316
(43) Veröffentlichungstag der Anmeldung: 25.09.2002
(73) Patentinhaber: WABCO GmbH, 30453 Hannover (DE)
(72) Erfinder: Frank, Dieter, 30171 Hannover (DE); Höfler, Siegfried, 30165 Hannover (DE); Sieker, Armin, 33611 Bielefeld (DE)
(74) Vertreter: Schrödter, Manfred

(56) Entgegenhaltungen:
- EP-A- 0 623 772
- DE-C- 975 662
- DE-U- 8 913 163
- GB-A- 983 174
- US-A- 4 862 127
- US-A- 6 105 931

## Beschreibung

Die Erfindung betrifft ein Herstellverfahren für Magnetanker.

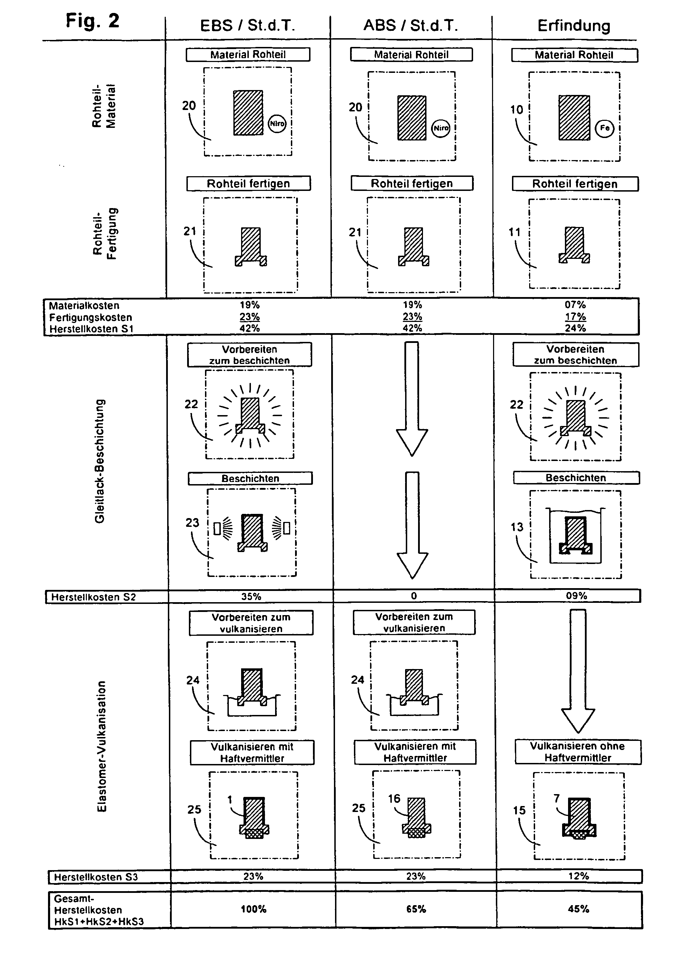

Aus der DE-A1 19 730 276 [im weiteren mit E1 bezeichnet] ist bekannt, daß es aus Gründen seiner Formstabilität und seiner Gleiteigenschaften vorteilhaft ist, den Magnetanker eines Magnetventiles mit einer Beschichtung aus einem Kunststoff zu versehen; Bezug genommen wird auf die dortige Fig. 2, die ein 3/2-Wegeventil, d. h. ein Ventil mit zwei Ventilsitzen, beschreibt, was die maximale Anzahl von Ventilsitzen darstellt, die durch die Realisierung mit gerade einem Magnetanker möglich ist.

An der Ventilschließfläche [dort (3)] des Ankers [dort (1)] ist eine Beschichtung vorgesehen, welche eine Beschädigung der Fläche verhindert, wenn diese bei der Magnetbetätigung auf den Ventilsitz [dort (4)] prallt.

Bei Abschaltung der Magnetbetätigung trifft durch die Wirkung der Rückstellfeder die zweite Schließfläche [dort (19)] auf den zweiten Ventilsitz [dort (20)] auf, wodurch es weiter vorteilhaft ist, auch an der zweiten Ventilschließfläche zum Schutz gegen Beschädigung eine Beschichtung vorzusehen. Weiter sind die Berührungsflächen [dort (6)] des Ankers mit der Führungseinrichtung [dort (5)] zur Erhöhung der Gleitfähigkeit mit einer Beschichtung ausgestattet.

Schließlich wird vorgeschlagen, den gesamten Anker in einem Arbeitsgang, z. B. durch Tauchen, mit einer Beschichtung zu versehen. Diese sehr kostengünstige Gesamtbeschichtung des Magnetanker ist bei den dort vorgestellten Ventilarten möglich, jedoch sind alle dort gezeigten Ventilsitze als Metall-Metall-Dichtsitze ausgestaltet, welche nicht über eine hermetische Dichtung verfügen.

Bei einer Anwendung in Vorsteuereinheiten für Bremsdruckmodulatoren von elektronisch geregelten Bremsanlagen in Fahrzeugen sind üblicherweise pro Kanal mindestens drei als Magnetventile ausgebildete Pilotventile vorgesehen ["Belüften", "Entlüften", Redundanzdruck-Funktion], welche jedoch in ihrer Abschlußstellung über einen hermetisch dichtenden Ventilsitz verfügen müssen, damit der Druck in der Steuerkammer des nachgeschalteten Relaisventils erhalten bleibt, wenn die Pilotventile nicht betätigt werden. Funktion und Wirkungsweise derartiger Pilot-Magnetventile ist in der nicht vorveröffentlichten deutschen Patentanmeldung 100 09 117.2 beschrieben, die im folgenden mit E2 bezeichnet wird.

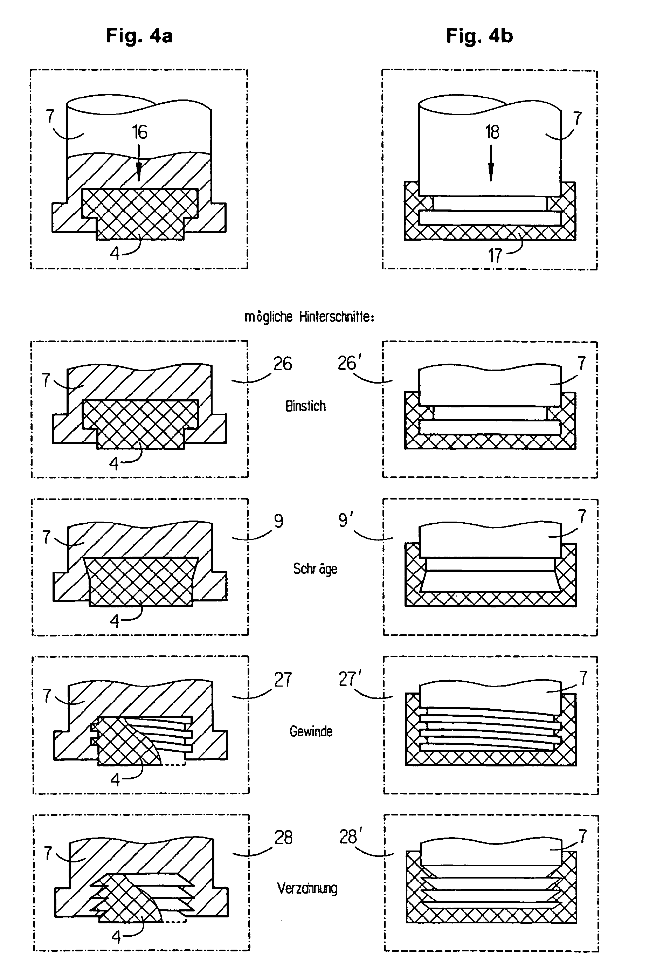

In Fig. 4 der E2 sind die Ventiltypen dargestellt, mit denen derartige Vorsteuereinheiten aufgebaut werden können: Dies ist einmal ein stromlos geschlossenes 2/2-Wegeventil [dort Fig. 4 (43) und (44)], ein stromlos offenes 2/2-Wegeventil [dort Fig. 4 (45) und (46)] und ein 3/2-Wegeventil [dort Fig. 4 (47) und (48)].

Für jeden der genannten Ventiltypen ist in der dortigen Fig. 4 der Magnetanker [dort (39)] gezeigt, der auf der einen Seite über eine Ausformung [dort (42)] zur Bildung eines nicht hermetisch dichtenden Metall-Metall-Dichtsitzes verfügt und auf der anderen Seite über einen Elastomer-Einsatz [dort (41)] zur Bildung des hermetisch dichtenden Ventilsitzes verfügt.

Die Magnetanker nach Fig. 4 der E2 lassen sich jedoch nicht mit einer Gesamtbeschichtung versehen, wie dies in der E1 vorgeschlagen ist.

Der Grund dafür besteht darin, daß die Elastomer-Einsätze nach Fig. 4 der E2 in entsprechende Ausnehmungen der Magnetanker einvulkanisiert sind, wobei zwischen dem ferromagnetischen Basismetall des Magnetankers und dem Elastomer-Einsatz eine haftende Elastomer-Metall-Verbindung besteht.

Diese Metall-Elastomer-Verbindung entsteht unter Mitwirkung eines Haftvermittlers zwischen dem Basismetall und dem Elastomer, wie dies unten erläutert ist. Der in seiner Funktionsweise äußerst sensible Haftvermittler wirkt aber nur, wenn eine, wie unten erläutert, gut vorbereitete Metall-Oberflache vorliegt; die Verwendung einer noch so dünnen Kunststoff-Beschichtung zwischen dem Basis-Metall und dem Elastomer-Einsatz schließt jede sichere Haftung dieses Einsatzes aus. Aus diesem Grund ist eine Kunststoff-Beschichtung der Ausnehmung für den Elastomer-Einsatz nicht möglich, wodurch eine Gesamtbeschichtung des Magnetankers für derartige Pilot-Magnetventile ausgeschlossen ist.

Die obenstehenden Erläuterungen zu Fig. 4 der E2 sind dem Fachmann als solche bekannt; die nicht vorveröffentlichte E2 wird hier lediglich deshalb erwähnt, weil die dortige Fig. 4 die gebräuchlichen Arten der Vorsteuer-Pilotventile zusammengefaßt darstellt.

Der Erfindung liegt deshalb die Aufgabe zugrunde, ein Verfahren zur Herstellung von Magnetankern anzugeben, das bei Beibehaltung eines Elastomer-Einsatzes im Magnetanker die Verwendung einer vollständigen Beschichtung des Magnetankers erlaubt.

Die Aufgabe wird durch die im Patentanspruch 1 angegebene Erfindung gelöst; Anspruch 2 stellt eine vorteilhafte Weiterbildung der Erfindung dar.

Die Erfindung hat den Vorteil, daß die Gesamt-Herstellkosten gegenüber dem Verfahren nach dem St. d. T. wesentlich verringert sind. Ein weiterer Vorteil der Erfindung besteht darin, daß der Herstellprozeß insgesamt weniger kritisch ist, da im Vergleich zum St. d. T. der am meisten fehleranfällige Vorgang bei der Herstellung, nämlich die Ausbildung einer haftenden Elastomer-Metall-Verbindung nicht mehr stattfindet.

Die Erfindung wird im folgenden anhand eines Ausführungsbeispiels, das in den Zeichnungen dargestellt ist, näher erläutert.

Es zeigt:
- Fig. 1: den Vergleich eines herkömmlichen Magnetankers zum Magnetanker des erfindungsgemäßen Fertigungsverfahrens;
- Fig. 2: das Fertigungsverfahren von herkömmlichen Magnetankern mit seinen Herstellkosten im Vergleich zum erfindungsgemäßen Fertigungsverfahren und seinen Herstellkosten;
- Fig. 3: eine Bewertung der Eigenschaften von herkömmlichen Magnetankern im Vergleich zu den Eigenschaften des nach dem erfindungsgemäßen Verfahren hergestellten Magnetankers;
- Fig. 4a: Ausführungsformen von Hinterschneidungen bei einem als Elastomer-Einsatz ausgebildeten Elastomer-Dichtelement;
- Fig. 4b: Ausführungsformen von nicht beanspruchten Hinterschneidungen bei einem als Elastomer-Dichtkappe ausgebildeten Elastomer-Dichtelement.

Die dem Fachmann bekannte übliche Bauform von Magnetankern und ihr Einbau in einem Ventilgehäuse wird anhand von Fig. 4 der E2 erläutert; die dortigen Bezugszeichen sind hier in geschweifte Klammern gesetzt.

Der Magnetanker {39} ist als zylindrischer Körper ausgebildet, mit einer Zylinder-Mantelfläche und zwei stirnseitigen Begrenzungsflächen [Fläche der Ausformung {42} und Begrenzungsfläche von {41}]; er ist aus einem ferromagnetischen Material hergestellt. An einer der beiden stirnseitigen Begrenzungsflächen ist an diesem Anker-Bereich ein Elastomer-Dichtelement {41} angeordnet.

Der Magnetanker ist, durch eine Feder {40} belastet, in einem Ventilgehäuse verschieblich gelagert, welches mit einem Betätigungsmagneten [Magnetspule {38}] versehen ist. Durch die Wirkung der Feder nimmt der Magnetanker im Ventilgehäuse bei nicht bestromten Betätigungsmagneten eine erste Stellung, die Grundstellung, ein [bei den drei dargestellten Ventilvarianten die Stellungen {43}, {45} und {47}], und bei bestromten Betätigungsmagneten nimmt der Magnetanker eine zweite Stellung, die Betätigungsstellung, ein [Stellungen {44}, {46} und {48}].

An mindestens einer dieser beiden Stellungen ist im Ventilgehäuse ein Ventilsitz {31} angeordnet; dieser ist in der Ausführungsform nach der dortigen Fig. 4 in den Grundstellungen {43} und {47} der entsprechenden Ventilvarianten gezeigt [alternativ kann ein Ventilsitz auch im Ventilgehäuse an der Betätigungsstellung angeordnet sein]. Bei diesen Ventilvarianten stellt eine der beiden Stellungen [in diesem Fall die Grundstellung] eine hermetisch dichtende Stellung dar; bei der Stellung {45} hat das entsprechende Ventil keine hermetisch dichtende Stellung, so daß die Verwendung eines Ventilsitzes entfällt.

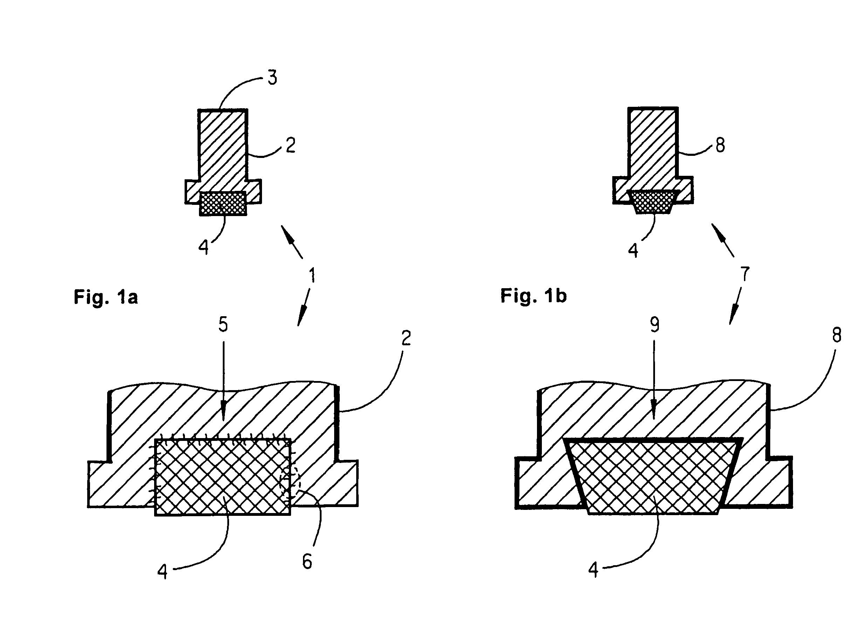

Das Elastomer-Dichtelement ist in Form eines Elastomer-Einsatzes [in Fig. 1a (4)] in einer entsprechenden Elastomer-Ausnehmung [in Fig. 1a (5)] im Magnetanker angeordnet, der dem Ventilsitz gegenübersteht, so daß bei Einnahme dieser Stellung der Ventilsitz über das Elastomer-Dichtelement druckdicht geschlossen ist.

Das Elastomer-Dichtelement, nämlich der Elastomer-Einsatz ist an den Begrenzungsflächen zur Elastomer-Ausnehmung im Magnetanker mit diesem über eine Elastomer-Metall-Verbindung [in Fig. 1a (6)] verbunden [andere Bezeichnung für Gummi-Metall-Verbindung]. Dieser Magnetanker der vorstehend beschriebenen Art wird im folgenden als Ankertyp "EBS/St. d. T." bezeichnet und ist in Fig. 1a mit dem Bezugszeichen (1) dargestellt, und zwar in der Zeichnung oben als ganzes Teil und in der Zeichnung unten als vergrößerter Ausschnitt mit dem als Elastomer-Einsatz (4) ausgebildeten Elastomer-Dichtelement.

Wie bereits vorstehend erläutert, bedarf die Elastomer-Metall-Verbindung eines Haftvermittlers, der nur auf einer sehr sorgfältig gereinigten und reinen Metalloberfläche wirksam ist, und die Verwendung einer Beschichtung, wie in der E1 vorgeschlagen, verbietet. Aus diesem Grund wird der Ankertyp "EBS/St. d. T." auch, wie unten erläutert, nur teilweise beschichtet, was zur Folge hat, daß mindestens der Ankerbereich um den Elastomer-Einsatz nicht beschichtet ist.

Der Vorteil einer Kunststoff-Beschichtung liegt u. a. auch darin, daß mit ihr grundsätzlich auch ein Korrosionsschutz verbunden sein kann. Gerade bei Anwendungen in der Fahrzeugtechnik ist aufgrund der dort herrschenden Umweltbedingungen ein Korrosionsschutz unbedingt erforderlich; da aber, wie gesagt, bei diesem Ankertyp ein Korrosionsschutz über die nicht vollständige Beschichtung nicht wirksam sein kann, muß der Korrosionsschutz durch andere Mittel realisiert werden.

Beim Ankertyp "EBS/St. d. T." wird der Korrosionsschutz durch Wahl einer sogenannten "nichtrostenden Stahllegierung" gelöst. Derartige Stahlsorten haben gegenüber normalem Weicheisen-Stahl [z. B. Baustahl St 37] drei große Nachteile: Sie sind erstens sehr teuer, sie lassen sich zweitens schwer bearbeiten, was z. B. an einem hohen Cr-Anteil liegt und sie haben drittens keine optimalen magnetischen Eigenschaften. Aufgrund dieser schlechten magnetischen Eigenschaften muß die Bauform des gesamten Magnetventiles vergrößert werden, dadurch erhöht sich die Masse und die so erhöhten Trägheitskräfte verhindern dann auch schnelle Ventilschaltzeiten.

Beim Ankertyp "EBS/St. d. T." (1) entsprechend Fig. 1a ist der Bereich der Mantelfläche (2) und die dem Elastomer-Einsatz gegenüberliegende Stirnseite (3) des Magnetankers mit einer schützenden Kunststoffschicht nach der Art der E1, vorzugsweise mit einem PTFE-Werkstoff [Polytetrafluoraethylen, Markenname z. B. "Teflon"] in einer Dicke von z. B. 12 µm ±5 µm, versehen. Diese Teilbeschichtung stellt die Dauerfestigkeit des Magnetankers für die EBS-Anwendungen sicher.

Das Erfordernis nach Dauerfestigkeit ergibt sich aus der hohen Zahl der Ventilbetätigungen für EBS-Bremsungen und der Art der Verschleißeinwirkung. Bei einer Fahrzeug-Lebensdauer von 20 Jahren ergibt sich eine Größenordnung von 40 Mio. Betriebsschaltungen, die der Anker mit nur geringer Formänderung zu überstehen hat.

Für die Dauerfestigkeit des Magnetankers sind, wie in der E1 erläutert, besonders zwei Bereiche zu beachten. Der erste Bereich stellt die seitliche Mantelfläche (2) des Magnetankers dar. Der Magnetanker ist innerhalb des Ventilgehäuses in einem Ankerführungsrohr gelagert, an das er sich während des Betriebs einseitig anlehnt. Durch die Reibung des Ankers reibt dieser während seiner Bewegung am Ankerführungsrohr, so daß es an der Berührungslinie zu Verschleiß kommt, woraufhin, wenn keine weiteren Maßnahmen vorgesehen sind, das Ankerführungsrohr zerstört wird. Die Beschichtung des Ankers auf seiner Mantelfläche setzt die Reibung des Ankers am Ankerführungsrohr soweit herab, daß dieses durch die Reibbewegungen im Betrieb nicht mehr zerstört wird.

Der andere Bereich stellt, wie ebenfalls auch in der E1 beschrieben, die dem Elastomer-Einsatz gegenüberliegende Stirnfläche dar, die durch die Kraft der Feder beim Umschalten in die Grundstellung am metallischen Anschlag auftrifft, wodurch am Anker an der Aufschlagfläche mit der Zeit eine Abflachung stattfindet, die sogar zu einer Art Pilzbildung führen kann, wie dies bei einem mit einem Hammer betätigten Meißel der Fall ist. Die Gefahr der Zerstörung des Anschlagbereiches wird durch die Beschichtung dieser Stirnfläche verhindert.

In Fig. 2 sind in der von links gesehen zweiten Spalte die Herstellkosten des Ankertyp "EBS/St. d. T." [Bezugszeichen (1) nach Fig. 1a] dargestellt. Hierzu sind die zur Zeit der Patentanmeldung gültigen Herstellkosten der einzelnen Fertigungsschritte auf die Gesamt-Herstellkosten dieses Ankertyps bezogen, so daß die Gesamt-Herstellkosten dieses Ankertyps 100 % betragen und sich somit für die Herstellkosten der einzelnen Fertigungsschritte Prozentzahlen ergeben, deren Summe wiederum gleich 100 % ist.

In einem ersten Fertigungsschritt S1 erfolgt die Herstellung des Magnetankers in seiner festgelegten Formgebung einschließlich des Anker-Bereichs für das Elastomer-Dichtelement. Die Herstellkosten des ersten Fertigungsschrittes S1 stellen mit 42 % einen erheblichen Teil der Gesamt-Herstellkosten dar. Dies liegt zum einen daran, daß aufgrund der vorstehenden Erläuterungen die Materialkosten für das Rohteil (20) aus korrosionsfreiem aber ferromagnetischem Grundmaterial [das Rohteil ist mit der Materialbezeichnung "Niro" gekennzeichnet] mit 19 % beträchtlich sind, und zum anderen sind die Fertigungskosten für die mechanische Bearbeitung aufgrund der vorstehend erläuterten erschwerten Bearbeitbarkeit [geringes Spanvolumen, häufiger Werkzeugwechsel] dieses Materials mit 23 % recht hoch.

Bei dieser Kostenabschätzung wird von einer spanenden Bearbeitung für die Rohteil-Fertigung (21) ausgegangen; es sei ergänzt, daß es auch möglich ist, das Rohteil spanlos, d. h. zum Beispiel im Fließpreßverfahren herzustellen. Die Herstellkosten eines einzelnen Teils sind dann wesentlich geringer, allerdings sind die Werkzeugkosten sehr hoch, so daß sich dieses Verfahren nur bei sehr großen Stückzahlen lohnt. Die im Vergleich zu anderen Materialien schwere Bearbeitbarkeit gilt allerdings auch hier.

Im zweiten Fertigungsschritt S2 erfolgt die Teilbeschichtung des Magnetankers, wie vorstehend erläutert, auf seiner Mantelfläche und der dem Elastomer-Dichtelement gegenüberliegenden Stirnfläche.

Da diese Gleitlack-Beschichtung üblicherweise von einem anderen Hersteller als die Rohteil-Fertigung durchgeführt wird, kommen die Teile per Versand vom Rohteil-Hersteller beim Beschichter an und dieser muß die von der Fertigung üblicherweise verschmutzten Teile als Vorbereitung für die Beschichtung zunächst sehr gründlich reinigen.

Die Beschichtung mit dem Kunststoffilm muß sehr sorgfältig erfolgen, da nur die seitliche Mantelfläche und die erwähnte Stirnfläche beschichtet werden darf; es ist unter allen Umständen zu vermeiden, daß Kunststoff in den Bereich der Ausnehmung für das Elastomer-Dichtelement gelangt, da sonst, wie vorstehend erläutert, die spätere Bildung einer sicheren Elastomer-Metallverbindung im Rahmen der Vulkanisierung nicht möglich ist.

Daher wird, wie in Fig. 2 vereinfacht dargestellt, für die Beschichtung ein Verfahren angewandt, z. B. Beschichten über Besprühen mittels Düsen, welches ein partielles Beschichten zuläßt: Die gereinigten Rohteile werden vereinzelt und als Einzelteile in einer Halterung im Verfahren der Düsenbeschichtung mit der Kunststoffschicht versehen. Das Kunststoff-Material wird über eine oder mehrere Düsen versprüht, wobei Werkstück und Düse relativ zueinander derart bewegt werden, daß gerade diejenigen Oberflächenbereiche, die beschichtet werden sollen, besprüht werden und die anderen Oberflächenbereiche frei bleiben. Durch dieses aufwendige Beschichtungsverfahren ergeben sich die relativ hohen Herstellkosten von 35 % für den Fertigungsschritt S2 der Gleitlack-Beschichtung. Im Anschluß an die Beschichtung findet eine Wärmebehandlung statt; diese ist für derartige Beschichtungs-Verfahren gleichartig und ist unten beim erfindungsgemäßen Fertigungsverfahren beschrieben.

Ein Elastomer-Dichtelement ist aus Elastomer-Material oder thermoplastischem Elastomer-Material hergestellt. Unter Elastomer wird ein elastisches Polymer [Kautschuk], d. h. eine organisch-chemische Verbindung oder ein Verschnitt von organisch-chemischen Verbindungen, verstanden, die durch Polymerisation von einzelnen Struktureinheiten [Monomeren], entsteht. Ein derartiges Polymer kann ein natürliches Polymer, wie z. B. Naturkautschuk [Polymerbezeichnung NR] darstellen, oder es kann durch chemische Polymerisation als synthetisches Polymer hergestellt sein.

Für den Einsatz als Elastomer-Dichtelement eignet sich in besonderer Weise das synthetische Polymer "Acrylnitril Butadien Kautschuk" [Polymerbezeichnung NBR], unter Umständen auch dieses Polymer in hydrierter Form [Polymerbezeichnung HNBR], oder Fluor Kautschuk [Polymerbezeichnung FKM, "Viton" (Warenzeichen der Fa. Du Pont)] oder andere. Unter Zugrundelegung von gewünschten Eigenschaften wie Elastizität, Reibwert und Temperaturbereich wird eine geeignete Mischung, vorwiegend auf Basis der genannten Polymere zusammengestellt. Außerdem sind thermoplastische Elastomere insbesondere auf Basis Polyurethan [TPU] geeignet.

Wie das Wort "Polymer" ausdrückt, liegen bei diesem Material sehr lange Molekülketten vor, welche die Grundlage der Elastizität darstellen. Elastomere im unvernetzten Zustand liegen als Massen vor, die bei erhöhter Temperatur teigig werden, und die noch nicht über die gewünschte Elastizität und Dehnfähigkeit verfügen.

Beim Naturkautschuk ist dies die getrocknete Latexmilch, bei der die Molekülketten noch nicht chemisch miteinander vernetzt sind. Durch Vermischung mit einer Reihe weiterer Chemikalien, unter anderen z. B. Ruß und Schwefel, entsteht aus diesem die Elastomer-Mischung. Erst durch die Vulkanisation, einen Wärme- und Druckprozeß wird aus der Elastomer-Mischung das eigentliche elastische Naturkautschuk-Elastomer. Man kann sich den Prozeß der Vulkanisation als Vernetzung der langen Molekülketten vorstellen, bei der die Molekülkettenfäden chemisch an Vernetzungspunkten miteinander verbunden werden. Die derart vernetzten Molekülketten wirken bei mechanischer Belastung zusammen, und es entsteht die reversible Dehnfähigkeit des Naturgummis, welche die Grundlage der Elastizität darstellt.

Auch synthetischer Kautschuk liegt nach der Polymerisation zunächst als teigiges Material vor, welches noch nicht elastisch ist, und erlangt dann, nach Vermischung mit einer Reihe anderer Chemikalien, im Rahmen der Vulkanisation als Druck- und Wärmeprozeß die Vernetzung seiner Molekülketten und damit seine elastischen Eigenschaften. Anstatt Schwefel können für die Vulkanisierung synthetischer Polymere z. B. Peroxyde oder auch andere Substanzen verwendet werden, die für diese Polymere speziell geeignet sind.

Bei thermoplastischen Elastomeren findet keine chemische Vernetzung der Molekülketten statt, sondern diese sind durch physikalische Wechselwirkung so stark aneinander gebunden, daß ein elastisches Material vorliegt. Bei Erwärmung gehen die Materialien in einen plastischen Zustand über, in dem die Formgebung erfolgen kann, anschließendes Erkalten läßt sie wieder in den elastischen Zustand übergehen.

Wie erläutert, werden für die Herstellung eines Elastomer-Dichtelementes für einen Magnetanker vorzugsweise die oben erwähnten synthetischen Polymere benutzt, und diese werden mit den für sie geeigneten Vernetzungsstoffen im Temperatur-/Druckprozeß vulkanisiert, bzw. im Falle der thermoplastischen Elastomere unter Erwärmung verarbeitet.

Entsprechend Fig. 1a wird beim Ankertyp "EBS/St. d. T." (1) die zunächst noch unvernetzte Mischung für den Elastomer-Einsatz (4) in die Elastomer-Ausnehmung (5) des Magnetankers eingebracht. Mit der Vernetzung des Elastomers im Temperatur-/Druckprozeß [bzw. mit der Abkühlung des thermoplastischen Elastomers] wird dann gleichzeitig eine stark haftende kraftschlüssige Elastomer-Metall-Verbindung zwischen dem Elastomer-Einsatz (4) und den Grund- und Seitenflächen der Elastomer-Ausnehmung (5) im Magnetanker (1) hergestellt; diese entsteht durch die Wirkung des vorstehend bereits erwähnten Haftvermittlers zwischen der Grenze des Elastomer-Einsatzes (4) und der Metalloberfläche der Elastomer-Ausnehmung (5), so wie mit dem Bezugszeichen (6) eine gegenseitige "Durchdringung" beider Grenzflächen angedeutet ist. Die Wirkung des Haftvermittlers kann man sich derart vorstellen, daß dieser einerseits eine gute Adhäsion zum Metall hat, indem innerhalb der Grenzschicht die intermolekularen Van der Waals-Kräfte wirksam werden, und andererseits eine gute Adhäsion zum Elastomer hat.

Alternativ zu dieser einlagigen Grenzschicht gibt es auch eine Ausführung als zweilagige Grenzschicht, bei der zunächst die Metalloberfläche mit einem festhaftenden Primer-Zement von z. B. 20 µm Dicke versehen ist, auf dem sich dann der mit dem Haftvermittler versehene Elastomer-Einsatz (4) aufbaut.

Die Dauerfestigkeit einer Elastomer-Metall-Verbindung beruht, nach welcher der bekannten Methoden sie auch ausgeführt ist, auf der sorgfältigen und reproduzierbaren Durchführung des Temperatur-/Druckprozesses der Vulkanisierung [bzw. der Abkühlung des thermoplastischen Elastomers] mit dem Haftvermittler (25) einschließlich der sehr sorgfältigen Vorbereitung zum Vulkanisieren (24) entsprechend Fig. 2.

Der dritte Fertigungsschritt S3 der Elastomer-Vulkanisation wird üblicherweise von einem anderen Lieferanten ausgeführt als dem, der die Beschichtung nach S2 durchführt, da hier sehr unterschiedliche Technologieanforderungen bestehen. Die nach dem Verfahrensschritt (23) beschichteten Teile kommen in der Regel beim Vulkanisierer auf dem Versandwege an und weisen an den Begrenzungsflächen der Elastomer-Ausnehmung (5) Verunreinigungen auf.

Im Rahmen der Vorbereitung zum Vulkanisieren (24) erfolgt zunächst eine sorgfältige Entfettung, an die sich gegebenenfalls eine Plasma-Reinigung anschließt, die jede Art von Verunreinigung entfernt, und eine hochaktive Metalloberfläche zustandebringt. Zur Verbesserung der Haftung kann auch die wirksame Metalloberfläche vergrößert werden, was z. B. durch Sandstrahlen mit Schleifstaub erfolgt. Schließlich wird die Metalloberfläche gegebenenfalls auch chemisch z. B. durch Phosphatieren oder Chromatieren verändert.

Die Vorbereitung zum Vulkanisieren (24) stellt also einen erheblichen Anteil der gesamten Herstellkosten des dritten Fertigungsschrittes S3 von 25 % dar. Der Teilschritt der Vulkanisierung mit dem Haftvermittler [bzw. der Abkühlung des thermoplastischen Elastomers] (25), welcher für den anderen Teil dieser Herstellkosten verantwortlich ist, wird vorzugsweise nach dem unten erläuterten Transferverfahren durchgeführt.

Wichtig ist, daß mit der Ausführung des Formgebungsverfahrens [Vulkanisieren beim Elastomer bzw. Einspritzen beim thermoplastischen Elastomer] die erforderliche Maßgenauigkeit für den Abstand der zum Dichtsitz weisenden glatten Elastomeroberfläche des Elastomereinsatzes (4) in Bezug auf den Magnetanker (1) sichergestellt ist. Durch das Formgebungsverfahren (25) werden also zwei Dinge bewirkt, nämlich die Haftung des Elastomer-Einatzes (4) am Magnetanker (1) und die Maßhaltigkeit des Elastomer-Einsatzes (4) für die Ventilfunktion.

Beim erfindungsgemäßen Fertigungsverfahren entsprechend der vierten Spalte von links bei Fig. 2 werden die Gesamt-Herstellkosten auf 45 % reduziert, wobei im einzelnen die Herstellkosten des ersten Fertigungsschrittes S1 von 42 auf 24 %, die Herstellkosten des zweiten Fertigungsschrittes S2 von 35 % auf 9 % und die Herstellkosten des dritten Fertigungsschrittes S3 von 23 % auf 12 % reduziert werden.

Bezüglich des ersten Fertigungsschrittes S1 kommt die Einsparung einmal durch die Reduzierung der Materialkosten von 19 % auf 7 % und die Reduzierung der Fertigungskosten von 23 % auf 17 % zustande. Wie oben erläutert wird der Korrosionsschutz durch die vollständige Beschichtung des Magnetankers erreicht, so daß ein preisgünstiges Grundmaterial [beim Rohmaterial (10) mit der Bezeichnung "Fe" versehen] gewählt werden kann. Bei der Wahl eines geeigneten Eisenwerkstoffes kann zudem auch auf sehr gute magnetische Eigenschaften Wert gelegt werden, da es hier eine hohe Anzahl entsprechender Werkstoffe gibt. Die Fertigungskosten für die Rohteil-Fertigung (11) sind reduziert, weil sich ein derartiger Eisenwerkstoff wesentlich einfacher bearbeiten läßt.

Für den zweiten Fertigungsschritt S2, die Gleitlack-Beschichtung, entspricht die Reinigung als Vorbereitung in etwa derjenigen beim Ankertyp "EBS/St. d. T." (22). Die erhebliche Einsparung der Herstellkosten von 35 % auf 9 % bei der Erfindung ergibt sich durch die wesentlich vereinfachte Art der Beschichtung: Beim erfindungsgemäßen Verfahren kann ein Massenprozeß angewendet werden; so ist in Fig. 2 in vereinfachter Darstellung für den Beschichtungsprozeß (13) ein Tauchverfahren gezeigt, bei dem alle zu beschichtenden Teile ohne die Notwendigkeit einer Vereinzelung und ohne die Erfordernis partiell freibleibender Oberflächen gemeinsam in ein Tauchbad abgesenkt werden und mit diesem einfachen Tauchen die Beschichtung bereits ausgeführt ist. Diese starke Vereinfachung gegenüber der Beschichtung beim Ankertyp "EBS/St. d. T." erklärt die Verringerung der Herstellkosten im zweiten Fertigungsschritt S2.

Ergänzt sei, daß für die Magnetanker direkt nach dem Tauchen die vorstehend bereits erwähnte Wärmebehandlung stattfindet, welche bewirkt, daß die PTFE-Schicht trocknet, daß eine gute Haftung auf der Metalloberfläche entsteht und daß sich auf der freien Oberfläche der PTFE-Schicht die gewünschten Gleiteigenschaften einstellen.

Anstatt im Tauchverfahren kann der Beschichtungsprozeß (13) auch mit einem alternativen Massenverfahren, u. a. im sogenannten Trommelverfahren, durchgeführt werden. In einer sich drehenden Trommel werden die zu beschichtenden Magnetanker auf ihrer ganzen Oberfläche mit pulverförmigem Beschichtungsmaterial überzogen, das durch diesen Prozeß auf der Oberfläche etwas verfestigt wird. Die auf diese Weise beschichteten Magnetanker werden dann, wie oben erläutert, noch der Wärmebehandlung unterzogen.

Beim erfindungsgemäßen Magentanker nach Fig. 1b wird die Haftung des Elastomer-Einsatzes (4) nicht mehr wie beim Stand der Technik durch eine kraftschlüssige Elastomer-Metall-Verbindung, sondern durch einen Formschluß hergestellt, welcher in Fig. 1b in Form einer Hinterschneidung ausgeführt ist. Hierzu ist die seitliche Begrenzungsfläche der Elastomer-Ausnehmung (9) als Schräge ausgebildet. Da das Wort "Hinterschneidung" umgangssprachlich etwas unscharf gehandhabt wird, sei erläutert, daß im Sinne der Erfindung die Hinterschneidung einer Bohrung [eines Loches] im allgemeinsten Sinne dann gegeben ist, wenn eine gedachte starre Füllung dieser Bohrung [dieses Loches] formschlüssig gesichert wird. Diese Sicherung entsteht dadurch, daß bei einer auf die Füllung in Richtung auf das [ein] offene[s] Ende der Bohrung [des Loches] wirkende Kraft F₁ auch bei gedachter völliger Abwesenheit von Kräften der Reibung und solchen der Adhäsion zwischen der Bohrungswand [Lochwand] und der Füllung Kräfte entstehen, welche Komponenten aufweisen, die der erstgenannten Kraft F₁ entgegenwirken.

Auf die Wirkung eines Haftvermittlers wird daher bei der Vulkanisation verzichtet. Die Verwendung eines Haftvermittlers wäre ohnehin wirkungslos, da auf der PTFE-Oberfläche der Beschichtung die Herstellung einer haftenden Verbindung zum Elastomer-Einsatz (4) nicht möglich ist.

Damit entfällt der beim Stand der Technik übliche Arbeitsgang der Vulkanisier-Vorbereitung. Da kein Haften stattfinden soll, können bei diesem Verfahren leichte Verunreinigungen akzeptiert werden, so daß der Reinigungsprozeß ggf. entfallen kann.

Zur Herstellung einer Elastomer-Metallverbindung gibt es die drei Verfahren der Formgestaltung nach dem Kompressionsverfahren, nach dem Transferverfahren und nach dem Injektionsverfahren. Für das erfindungsgemäße Fertigungsverfahren eignet sich besonders das Transferverfahren, bei dem der Magnetanker (7) in ein Werkzeug eingespannt wird und dann über eine Matrize das zu vernetzende Polymer in den Hohlraum der Elastomer-Ausnehmung (9) gedrückt wird. Das Polymer wird dabei über der Matrizenöffnung in die Maschine eingelegt, und ein Preßstempel übt einen Druck auf das Polymer aus, so daß es durch die Matrizen-Öffnung in den Hohlraum der Elastomer-Ausnehmung fließen kann. Je nach der Art des zu verarbeitenden Polymers wird bei diesem Preßvorgang ein Druck von üblicherweise 200 bis 250 bar (1 bar=10⁵Pa) erzeugt, wobei das Werkzeug auf eine Temperatur von 170 bis 200°C vorgeheizt ist. Die Zeit für die Durchführung dieses Formgebungsverfahrens [Vulkanisieren beim Elastomer bzw. Einspritzen beim thermoplastischen Elastomer] beträgt je nach den Randbedingungen zwischen 1 min und 2 min.

Bei diesem Transferprozeß wird, wie dies vorstehend erläutert ist, die Maßhaltigkeit des Elastomer-Einsatzes (4) nach Fig. 1b für die Ventilfunktion sichergestellt. Zu dieser Maßhaltigkeit gehört einerseits, daß die zum Ventilsitz weisende Oberfläche des Elastomer-Einsatzes (4) im Bereich der Auflageflächen des Ventilsitzes entsprechend eben und glatt ausgebildet ist, was durch eine glatte Oberfläche des Werkzeuges gewährleistet ist als auch andererseits, daß, wie vorstehend erläutert, das Abstandsmaß dieser Oberfläche zum Magnetanker (7) gleich dem für die Ventilfunktion erforderlichen Abstand ist.

Mit der vereinfachten Vulkanisierung ohne Haftvermittler verringern sich entsprechend Fig. 2 die Herstellkosten für den dritten Fertigungsschritt S3 von 23 % beim Ankertyp EBS/St. d. T, der aus den Unterschritten (24) und (25) besteht, beim erfindungsgemäßen Magnetanker (7) auf 12 %, da hier nur das haftvermittlerfreie Vulkanisieren erforderlich ist.

In der dritten Spalte von links ist in Fig. 2 der Fertigungsprozeß für den Ankertyp "ABS/St. d. T." (16) dargestellt. Dieser Ankertyp stellt einen bekannten Anker für ABS/ASR-Bremsdruckmodulatoren dar.

Für einen derartigen Magnetanker sind die funktionellen Anforderungen durchaus gleichartig zum Ankertyp "EBS/St. d. T.". Auf jeden Fall ist auch hier ein Korrosionsschutz erforderlich, wodurch auch für den Ankertyp "ABS/St. d. T." eine "nichtrostende Stahllegierung" (20) gewählt ist; hierdurch gilt auch hier die gleiche Kostenstruktur wie beim Ankertyp "EBS/St. d. T." mit Herstellkosten für den ersten Fertigungsschritt S1 von 42 %.

Bezüglich einer Dauerfestigkeit ergibt sich für den Ankertyp "ABS/St. d. T." gegenüber dem Ankertyp "EBS/St. d. T." eine Vereinfachung, indem diese für den ABS-Typ nicht erforderlich ist. Da nur ein sehr geringer Teil aller Bremsungen ABS-Bremsungen sind, ist über die Fahrzeug-Lebensdauer von 20 Jahren nur mit weniger als 1 Million Betriebsschaltungen des Ankers zu rechnen; alle anderen Bremsungen werden von der konventionellen Betriebsbremseinrichtung ohne Mitwirkung der ABS-Magnetregelventile durchgeführt. Die Anzahl der Betriebsschaltungen eines Magnetankers bei ABS-Ankern in konventionellen Bremsanlagen ist also gegenüber EBS-Ankern drastisch reduziert; bei einer derart reduzierten Betätigungsanzahl sind Anforderungen an die Dauerfestigkeit des Magnetankers ebenfalls drastisch reduziert, und so ist auch in Fig. 2 keine Gleitlack-Beschichtung für diesen Ankertyp vorgesehen. Es sei ergänzt, daß in der obigen Abschätzung auch die ASR-Betriebsschaltungen sinngemäß mit berücksichtigt sind.

Der dritte Fertigungsschritt S3, die Herstellung der Elastomer-Metallverbindung über die Elastomer-Vulkanisation (25) entspricht wieder derjenigen des Ankertyps "EBS/St. d. T.", wodurch hier die gleichen Herstellkosten von 23 % eingesetzt sind.

Für den Ankertyp "ABS/St. d. T." ergeben sich also Gesamt-Herstellkosten von 65 %. Diese Herstellkosten liegen als solche erheblich über den Herstellkosten des erfindungsgemäßen Fertigungsverfahrens von 45 %. Das erfindungsgemäße Herstellverfahren weist also den zusätzlichen Vorteil auf, daß es auch ein kostenreduziertes Verfahren zur Herstellung von ABS-Magnetankern darstellt. Mit dem erfindungsgemäßen Verfahren braucht also nur noch ein Ankertyp hergestellt werden und dieser läßt sich sowohl für EBS- sowie für ABS-Anwendungen verwenden. Die Verwendung von nur einem Ankertyp führt in der Fertigungsplanung zu vereinfachter und daher kostenreduzierter Disposition, sie reduziert die Lagerhaltung und vor allem reduziert sie die Herstellkosten über das in Fig. 2 angezeigte Maß hinaus durch eine wesentliche Vergrößerung der Stückzahlen, was in der prozentualen Betrachtung der Kosten nicht dargestellt ist.

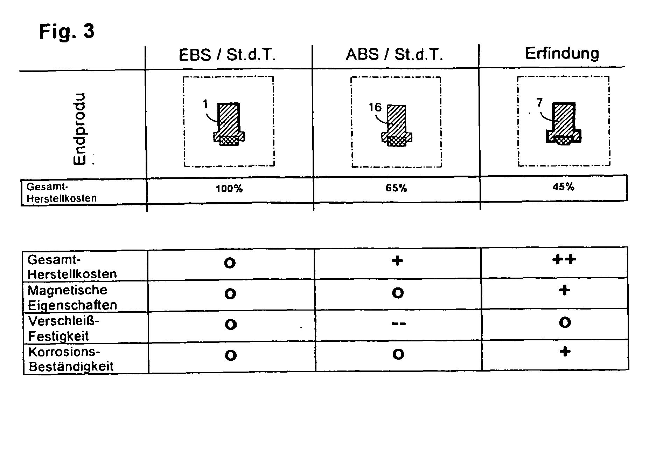

In Fig. 3 sind die Bewertungen der Eigenschaften der beiden vorstehend erläuterten herkömmlichen Magnetanker und diejenigen des nach dem erfindungsgemäßen Verfahren hergestellten Magnetankers als Liste dargestellt. Als Bezugsgröße dient der Magnetanker EBS/St. d. T. (1) in der zweiten Spalte von links, für den deswegen in allen Spalten der Gesamt-Herstellkosten, der magnetischen Eigenschaften, der Verschleißfestigkeit und der Korrosionsbeständigkeit "0" eingetragen ist. In der dritten Spalte von links sind die Bewertungen der Eigenschaften des Ankertyps ABS/St. d. T (16) und in der vierten Spalten von links sind die Eigenschafts-Bewertungen des erfindungsgemäßen Magnetankers eingetragen.

Die Herstellkosten des Ankertyps ABS/St. d. T (16) sind vergleichsweise geringer, weshalb in der Spalte ein "+" eingetragen ist, was natürlich keine Verbesserung im eigentlichen Sinne darstellt, weil diese Kostenreduzierung nur auf den Wegfall der hier nicht erforderlichen Beschichtung zurückzuführen ist. Die Herstellkosten des erfindungsgemäßen Magnetankers (7) sind im Vergleich zum Bezugsgrößen-Anker erheblich reduziert; die Bewertung zeigt "++".

Die magnetischen Eigenschaften des Ankertyps ABS/St. d. T. (16) sind gleichartig zum Bezugsanker. Wie vorstehend schon erwähnt, sind die magnetischen Eigenschaften einer Stahllegierung im allgemeinen gegenläufig zur Korrosionsbeständigkeit [eine Verbesserung der magnetischen Eigenschaften hat in vielen Fällen einen negativen Einfluß auf die Korrosionsbeständigkeit und umgekehrt], so daß bei der Materialauswahl ein Kompromiß zwischen ausreichenden magnetischen Eigenschaften und einer noch akzeptablen Korrosionsbeständigkeit gesucht werden muß. Beim erfindungsgemäßen Magnetanker (7) braucht jedoch bei der Materialwahl keine Rücksicht auf die Korrosionsbeständigkeit genommen werden, und die Auswahl kann aufgrund der guten magnetischen Eigenschaften einer Eisenlegierung getroffen werden, so daß die magnetischen Eigenschaften für diesen Magnetanker mit "+" bewertet sind.

Bezüglich der Verschleißfestigkeit sind der Magnetanker EBS/St. d. T (1) und der erfindungsgemäße Magnetanker (7) als gleich zu bewerten, da beide Ankertypen an den für den Verschleiß kritischen Flächen beschichtet sind; der Magnetanker ABS/St. d. T. (16) weist dagegen keine Beschichtung auf, er weist nur geringe Verschleißfestigkeit auf, so daß in die Bewertung ein "--" eingetragen ist.

Bei der Korrosionsbeständigkeit weist der erfindungsgemäße Magnetanker (7) ein "+" gegenüber den anderen beiden Typen auf; bei diesem Magnetanker ist die Korrosionsbeständigkeit durch die umlaufende Beschichtung sichergestellt, während bei den anderen beiden Magnetankern aufgrund des oben erläuterten Kompromisses zwischen Korrosionsbeständigkeit und magnetischen Eigenschaften einer Legierung die Magnetanker (1) und (16) nicht "vollständig" korrosionsgeschützt sind; bei ihnen gibt es z. B. unter bestimmten negativen Umwelteinflüssen noch die Gefahr, daß sich auf ihrer Oberfläche "Flugrost" bildet.

Neben der erläuterten Ausführungsform, bei der das Elastomer-Dichtelement als Elastomer-Einsatz ausgebildet und für diesen Elastomer-Einsatz in einem Anker-Bereich des Magnetankers eine Elastomer-Ausnehmung mit inneren seitlichen Begrenzungsflächen vorgesehen ist, besteht auch die Möglichkeit, das Elastomer-Dichtelement als Elastomer-Kappe zu realisieren. Bei dieser Ausführungssform ist, wie in Fig. 4b in der obersten Darstellung gezeigt, der Anker-Bereich (18) für die Elastomer-Kappe (17) als Zylinderteil mit äußeren seitlichen Begrenzungsflächen ausgebildet, um welche die Elastomer-Kappe (17) im Rahmen der Vulkanisierung gespritzt ist.

Es wird darauf hingewiesen, daß dies eine Lösung mit höherer technischer Qualität als das bekannte Verfahren darstellt, eine vorgefertigte Elastomer-Kappe auf ein Zylinderteil nur mechanisch aufzuschnappen. Bei aufgeschnappter Elastomer-Kappe ist die Maßgenauigkeit der Dichtfläche nicht in ausreichendem Maß gewährleistet. Hingegen wird, wie vorstehend erläutert, im Rahmen des Vulkanisierprozesses die Maßhaltigkeit der als Dichtfläche wirkenden freien Elastomer-Oberfläche gewährleistet und die Ventilfunktion ist somit sichergestellt.

In Fig. 4a ist im oberen Bild der erfindungsgemäße Magnetanker in seiner eingangs erläuterten Ausführungsform mit der Elastomer-Ausnehmung (16) mit ihren inneren seitlichen Begrenzungsflächen gezeigt.

In den unteren Teilbildern von Fig. 4a bzw. Fig. 4b sind mögliche Ausführungsformen von Hinterschneidungen dargestellt. Die Fig.4b zeigt nicht beanspruchte Ausführungsformen.

Die Ausführungsform (9) zeigt die Hinterschneidung als Schräge in einem Abschnitt der seitlichen Begrenzungsfläche der Elastomer-Ausnehmung (16). Die nicht beanspruchte Ausführungsform (9') zeigt eine gleichartige Realisierung des Hinterschnitts in einem Abschnitt der seitlichen Begrenzungsfläche des Zylinderteils (18).

Die Ausführungsformen (26) bzw. die nicht beanspruchten Ausführungsformen (26') zeigen Ausführungsformen der Hinterschneidungen durch einen Einstich in die jeweilige seitliche Begrenzungsfläche, wobei natürlich auch statt des einen Einstiches mehrere Einstiche vorgesehen sein können.

Die Ausführungsformen (27) bzw. nicht beanspruchten Ausführungsformen (27') zeigen die Ausführungsform einer Hinterschneidung als Gewindesegment in einem Abschnitt der jeweiligen seitlichen Begrenzungsflächen; dies kann natürlich auch in mehreren Abschnitten der seitlichen Begrenzungsflächen vorgesehen sein.

Schließlich zeigen die Ausführungsformen (28) bzw. die nicht beanspruchten Ausführungsformen (28') die Ausführungsform einer Hinterschneidung als Verzahnung, die entsprechend den vorstehenden Ausführungen in einem oder mehreren Abschnitten der seitlichen Begrenzungsflächen vorgesehen sein kann.

Neben der erläuterten Ausführungsform mit einem Elastomer-Dichtelement in jeweils einem Anker-Bereich des Magnetankers können auch an beiden äußeren Anker-Bereichen des Anker-Zylinderteils Elastomer-Dichtelemente [als Elastomer-Einsatz oder als Elastomer-Kappe] vorgesehen sein. Für einem solchen Magnetanker sind dann im Ventil für beide Anker-Stellungen hermetisch dichtende Ventilsitze vorgesehen.

Bei einem solchen Magnetanker sind die beiden Elastomer-Dichtelemente vorteilhafterweise durch einen Kanal im Inneren des Magetankers miteinander verbunden. Dieser Kanal wird bei der Formgebung ebenfalls mit Elastomer gefüllt, so daß ein Formschluß entsteht und bei dieser Auführungsform auf eine Hinterschneidung verzichtet werden kann. Auch bei dieser Variante kann man vorher den Ankerkörper auf der gesamten Oberfläche mit Gleitlack beschichten.

## Patentansprüche

1. Herstellverfahren für einen als zylindrischen Körper mit einer Mantelfläche (2) und zwei stirnseitigen Begrenzungsflächen (3) ausgebildeten Magnetanker (1;7) aus ferromagnetischem Material und mindestens einem an mindestens einem der beiden stirnseitigen Anker-Bereiche angeordneten Elastomer-Dichtelement, der in einem mit einem Betätigungsmagneten versehenen Ventilgehäuse durch eine Feder belastet verschieblich gelagert ist, wobei der Magnetanker (1;7) bei nicht bestromtem Betätigungsmagneten eine erste Stellung, die Grundstellung, einnimmt und bei bestromtem Betätigungsmagneten eine zweite Stellung, die Betätigungsstellung, einnimmt, und wobei bei Ventilen mit mindestens einer hermetisch dichtenden Stellung in mindestens einer der beiden Stellungen im Ventilgehäuse ein Ventilsitz angeordnet ist, welcher bei der Einnahme dieser Stellung durch den Magnetanker (1;7) über das mindestens eine Elastomer-Dichtelement druckdicht geschlossen ist, mit folgenden Verfahrensschritten:
a) in einem ersten Fertigungsschritt (11) erfolgt die Herstellung des Magnetankers (7) in seiner festgelegten Formgebung einschließlich des AnkerBereiches für das mindestens eine Elastomer-Dichtelement derart, daß das Elastomer-Dichtelement als Elastomer-Einsatz (4) und der Anker-Bereich als Elastomer-Ausnehmung (9) mit inneren seitlichen Begrenzungsflächen realisiert sind, welche einen Hohlraum mit nur einer Öffnung in Richtung des mit dem Elastomer-Dichtelements versehenden stirnseitigen Anker-Bereichs aufweist;
b) in einem zweiten Fertigungsschritt (13) erfolgt die Beschichtung des Magnetankers (7) mit einer Kunststoff-Schicht auf seiner gesamten Oberfläche;
c) in einem dritten Fertigungsschritt (15) erfolgt die Einbringung und Vulkanisierung von Elastomer in den Anker-Bereich für das mindestens eine Elastomer-Dichtelement, wobei folgende Unterschritte vorgesehen sind:
c1) Einbringen von unvernetztem Elastomer-Material in den Anker-Bereich für das Elastomer-Dichtelement ohne Verwendung eines Haftvermittlers;
c2) Vernetzung des eingebrachten ElastomerMaterials durch Druck- und Wärmeeinwirkung.

2. Herstellverfahren nach Anspruch 1, **dadurch gekennzeichnet, daß** Einbringen von unvernetztem Elastomer-Material ohne vorhergehende separate Reinigung erfolgt.

3. Herstellverfahren nach mindestens einem der Ansprüche 1 oder 2, **dadurch gekennzeichnet, daß** zwischen dem mindestens einen Elastomer-Dichtelement und dem Anker (7) ein Formschluß hergestellt wird.

4. Herstellverfahren nach Anspruch 3, **dadurch gekennzeichnet, daß** der Formschluß durch eine Hinterschneidung (9;26;27;28) in dem für das Dichtelement vorgesehenen Anker-Bereich realisiert wird.

5. Herstellverfahren nach Anspruch 4, **dadurch gekennzeichnet, daß** die Hinterschneidung (9;26;27;28) in den seitlichen Begrenzungsflächen der Elastomer-Ausnehmung realisiert wird.

6. Herstellverfahren nach Anspruch 4, **dadurch gekennzeichnet, daß** die Hinterschneidung (9) **dadurch** realisiert ist, daß in mindestens einem Abschnitt die seitliche Begrenzungsfläche als eine Schräge ausgebildet wird.

7. Herstellverfahren nach Anspruch 4, **dadurch gekennzeichnet, daß** die Hinterschneidung (26;) durch mindestens einen Einstich in der seitlichen Begrenzungsfläche realisiert wird.

8. Herstellverfahren nach Anspruch 4, **dadurch gekennzeichnet, daß** die Hinterschneidung (27;28) **dadurch** realisiert ist, daß die seitliche Begrenzungsfläche in mindestens einem Abschnitt als Gewindesegment oder Verzahnung ausgebildet wird.

9. Herstellverfahren nach mindestens einem der Ansprüche 3 bis 8, **dadurch gekennzeichnet, daß** für das Elastomer-Dichtelement ein hermoplastischer ElastomerWerkstoff gewählt wird.

## Claims

1. Method of manufacturing a magnet armature (1; 7) from ferromagnetic material as a cylindrical body with a circumferential surface (2) and two end boundary faces (3) and at least one elastomer sealing element arranged on at least one of the two end regions of the armature, the armature being mounted displaceably under the load of a spring in a valve housing provided with an actuating magnet, wherein the magnet armature (1; 7) adopts a first position, the home position, when current is not applied to the actuating magnet, and adopts a second position, the actuating position, when current is applied to the actuating magnet, and wherein, in the case of valves with at least one hermetically sealing position in at least one of the two positions, arranged in the valve housing there is a valve seat, which is closed with a pressure-tight seal by means of the at least one elastomer sealing element when this position is adopted by the magnet armature (1;7), said method comprising the following steps:
a) in a first production step (11), the magnet armature (7) is manufactured in its intended form, including the armature region for the at least one elastomer sealing element, in such a way that the elastomer sealing element takes the form of an elastomer insert (4) and the armature region takes the form of an elastomer recess (9) with inner lateral boundary faces, which comprise a cavity with only one opening in the direction of the end region of the armature provided with the elastomer sealing element;
b) in a second production step (13), the magnet armature (7) is coated over its entire surface with a layer of plastic;
c) in a third production step (15), elastomer is introduced into the armature region for the at least one elastomer sealing element and vulcanized, the following substeps being provided:
c1) introducing uncrosslinked elastomer material into the armature region for the elastomer sealing element without using an adhesion promoter;
c2) crosslinking the introduced elastomer material by the action of pressure and heat.

2. Manufacturing method according to Claim 1, **characterized in that** uncrosslinked elastomer material is introduced without prior separate cleaning.

3. Manufacturing method according to at least one of Claims 1 and 2, **characterized in that** an interlocking relationship is established between the at least one elastomer sealing element and the armature (7).

4. Manufacturing method according to Claim 3, **characterized in that** the interlocking relationship is established by an undercut (9; 26; 27; 28) in the armature region provided for the sealing element.

5. Manufacturing method according to Claim 4, **characterized in that** the undercut (9; 26; 27; 28) is provided in the lateral boundary faces of the elastomer recess.

6. Manufacturing method according to Claim 4, **characterized in that** the undercut (9) is provided by the lateral boundary face being bevelled in at least one portion.

7. Manufacturing method according to Claim 4, **characterized in that** the undercut (26) is provided by at least one cut made into the lateral boundary face.

8. Manufacturing method according to Claim 4, **characterized in that** the undercut (27; 28) is provided by the lateral boundary face being formed as a threaded segment or serration in at least one portion.

9. Manufacturing method according to at least one of Claims 3 to 8, **characterized in that** a thermoplastic elastomer material is chosen for the elastomer sealing element.

## Revendications

1. Procédé de fabrication d'une armature (1; 7) réalisée sous la forme d'un corps cylindrique avec une surface latérale (2) et deux faces de limitation frontales (3), en matériau ferromagnétique, et avec au moins un élément d'étanchéité élastomère disposé sur au moins une des deux zones frontales de l'armature, qui est montée de façon coulissante et sous la charge d'un ressort dans un boîtier de soupape pourvu d'un aimant d'actionnement, dans lequel l'armature (1; 7) occupe une première position, la position de base, lorsque l'aimant d'actionnement n'est pas activé, et une deuxième position, la position d'actionnement, lorsque l'aimant d'actionnement est activé, et dans lequel, dans le cas de soupapes avec au moins une position hermétiquement étanche, un siège de soupape est disposé dans le boîtier de soupape dans au moins une des deux positions, lequel est fermé de façon étanche à la pression par ledit au moins un élément d'étanchéité élastomère lorsque cette position est occupée par l'armature (1; 7), comportant les opérations suivantes:
a) dans une première étape de fabrication (11), on procède à la fabrication de l'armature (7), dans sa forme fixée, y compris la zone de l'armature destinée audit au moins un élément d'étanchéité élastomère, de telle manière que l'élément d'étanchéité élastomère soit réalisé sous la forme d'un insert d'élastomère (4) et la zone de l'armature sous la forme d'un évidement d'élastomère (9) avec des faces de limitation latérales intérieures, qui présente une cavité avec seulement une ouverture en direction de la zone frontale de l'armature pourvue de l'élément d'étanchéité élastomère;
b) dans une deuxième étape de fabrication (13), on procède au revêtement de l'armature (7) avec une couche de matière plastique sur toute sa surface;
c) dans une troisième étape de fabrication (15), on procède à l'insertion et à la vulcanisation de l'élastomère dans la zone de l'armature destinée audit au moins un élément d'étanchéité élastomère, dans lequel il est prévu les sous-étapes suivantes:
c1) insertion d'un matériau élastomère non réticulé dans la zone de l'armature destinée à l'élément d'étanchéité élastomère sans utilisation d'un agent d'adhérence;
c2) réticulation du matériau élastomère inséré par application de chaleur et de pression.

2. Procédé de fabrication selon la revendication 1, **caractérisé en ce que** l'on procède à l'insertion de matériau élastomère non réticulé sans nettoyage séparé préalable.

3. Procédé de fabrication selon au moins une des revendications 1 ou 2, **caractérisé en ce que** l'on réalise un assemblage par complémentarité de forme entre ledit au moins un élément d'étanchéité élastomère et l'armature (7).

4. Procédé de fabrication selon la revendication 3, **caractérisé en ce que** l'on réalise l'assemblage par complémentarité de forme à l'aide d'une contre-dépouille (9; 26; 27; 28) dans la zone de l'armature destinée à l'élément d'étanchéité.

5. Procédé de fabrication selon la revendication 4, **caractérisé en ce que** l'on réalise la contre-dépouille (9; 26; 27; 28) dans les faces de limitation latérales de l'évidement d'élastomère.

6. Procédé de fabrication selon la revendication 4, **caractérisé en ce que** l'on réalise la contre-dépouille (9) en formant la face de limitation latérale sous la forme d'une face oblique dans au moins une partie.

7. Procédé de fabrication selon la revendication 4, **caractérisé en ce que** l'on réalise la contre-dépouille (26) par au moins une entaille dans la face de limitation latérale.

8. Procédé de fabrication selon la revendication 4, **caractérisé en ce que** l'on réalise la contre-dépouille (27; 28) en formant la face de limitation latérale sous la forme d'un segment fileté ou d'une denture dans au moins une partie.

9. Procédé de fabrication selon au moins une des revendications 3 à 8, **caractérisé en ce que** l'on choisit pour l'élément d'étanchéité élastomère un matériau élastomère thermoplastique.
